# EUROPEAN PATENT SPECIFICATION

(11) **EP 4 117 069 B1**
(45) Date of publication and mention of the grant of the patent: **04.03.2026**
(21) Application number: 22746283.5
(22) Date of filing: 28.01.2022
(51) Int. Cl.: H01M 4/04, H01M 10/04, H01M 10/0525, H01M 10/0585, H01M 50/403, H01M 50/406, H01M 50/46

(54) **SEPARATOR ADHESION APPARATUS**
SEPARATORVERBINDUNGSVORRICHTUNG
DISPOSITIF DE LIAISON DE SÉPARATEUR

(30) Priority: 28.01.2021 KR 20210012574
(43) Date of publication of application: 11.01.2023
(73) Proprietor: LG Energy Solution, Ltd., Seoul 07335 (KR)
(72) Inventor: KIM, Woong Ki, Daejeon 34122 (KR); LEE, Sang Don, Daejeon 34122 (KR); YEO, Sang Uk, Daejeon 34122 (KR); CHOI, Dong Soon, Daejeon 34122 (KR); HAN, Do Seong, Daejeon 34122 (KR)
(74) Representative: Plasseraud IP
(86) International application number: PCT/KR2022/001579
(87) International publication number: WO 2022/164257

(56) References cited:
- EP-A1- 2 830 139
- WO-A1-2020/241821
- JP-A- 2008 147 144
- JP-A- 2016 103 450
- JP-A- 2019 029 267
- KR-A- 20130 001 294
- KR-A- 20200 109 042

## Description

### [Technical Field]

The present invention relates to a separator adhesion apparatus. More particularly, the present invention relates to a separator adhesion apparatus capable of preventing folding of a separator of a stacked type electrode assembly.

### [Background Art]

With acceleration in capacity increase and energy density improvement of a lithium secondary battery, the lithium secondary battery has been used as an energy source for medium and large devices, such as a vehicle or a power storage system, as well as small devices, such as a portable electronic device.

The lithium secondary battery may be manufactured using a method of receiving an electrode assembly, configured to have a structure in which a positive electrode, a separator, and a negative electrode are sequentially stacked, in a battery case and hermetically sealing the battery case.

The electrode assembly includes a single-cell configured to have a structure in which a first electrode and a separator are stacked, a mono-cell configured to have a structure in which a first electrode, a separator, and a second electrode are stacked, and a bi-cell configured to have a structure in which a first electrode, a separator, a second electrode, a separator, and a third electrode are stacked.

In order to manufacture the electrode assembly, two or more separator sheets having electrodes disposed thereon so as to be spaced apart from each other by a predetermined distance are prepared, and the separator sheets are stacked such that the electrodes overlap each other. A lamination process of applying heat and pressure to the stacked electrodes and separator sheets so as to be adhered to each other is performed, and then parts of the separator sheets between the electrodes at which no electrodes are disposed are cut, whereby unit cells are completed.

Separator surplus portions each having a size of about 1 mm to 2 mm extend from the peripheries of the electrodes of each unit cell. Since the surplus portions are not fixed, the surplus portions may be folded or torn during transfer of the unit cell, whereby the electrodes may be exposed. When the exposed positive and negative electrodes come into contact with each other, fire may break out due to internal short circuit. That is, safety of the lithium secondary battery may become an issue.

Consequently, it is necessary to prevent folding of the separator of the lithium secondary battery in view of safety.

In connection therewith, Patent Document 1 discloses an electrode assembly manufacturing apparatus that laminates ends of adjacent separators of an electrode stack constituted by a first electrode, a separator, a second electrode, a separator, and a first electrode stacked in that order.

Patent Document 1 discloses a roller having an embossed surface or an engraved surface configured to laminate the ends of the separators extending farther than the electrodes. The roller is configured to laminate peripheral surplus portions parallel to a transfer direction of the electrode stack; however, technology for fixing separator surplus portions formed perpendicular to the transfer direction of the electrode stack is not suggested.

Patent Document 2 discloses an electrode assembly manufacturing apparatus including a lamination unit configured to press an electrode assembly while allowing the electrode assembly to pass between a pair of pressing rolls to laminate an electrode and a separator and a thickness measurement unit configured to measure the thickness of at least one of the electrode and the separator, wherein the electrode and the separator are laminated while at least one of the position of the pair of the pressing rolls, the distance between the pressing rolls, and pressing force of the pressing rolls is adjusted based on a value measured by the thickness measurement unit.

In Patent Document 2, the position of the pair of the pressing rolls, the distance between the pressing rolls, and pressing force of the pressing rolls are adjusted in order to increase the force of adhesion between the electrode and the separator; however, technology for increasing the force of adhesion between the separator surplus portions overlapping each other by two or more layers is not suggested.

Accordingly, there is a need for technology capable of preventing folding of separator surplus portions formed perpendicular to a movement direction of an electrode stack in a unit cell having two or more layers of separators overlapping each other, thereby securing safety of a lithium secondary battery.

### (Prior Art Documents)

(Patent Document 1) Korean Patent Application Publication No. 2018-0057847 (2018.05.31);
(Patent Document 2) Korean Patent Application Publication No. 2020-0066901 (2020.06.11);
(Patent Document 3) European Patent Application Publication No. EP 2 830 139 A1 relating to an apparatus that sandwich electrode sheets in which the separators are bonded by thermal bonding between the electrode sheets.

### [Disclosure]

### [Technical Problem]

The present invention has been made in view of the above problems, and it is an object of the present invention to provide a separator adhesion apparatus including a structure in which, in separator sheets each having electrodes disposed thereon so as to be spaced apart from each other while forming a spacing portion, the spacing portion is pressed such that adjacent parts of the separator sheets are adhered to each other at the spacing portion.

### [Technical Solution]

In order to accomplish the above object, the present invention provides a separator adhesion apparatus according to claim 1.

The separator adhesion apparatus according to the present invention may further include a transfer unit configured to transfer the electrode stack.

The length of the first electrode parallel to a direction in which the electrode stack is transferred is less than the length of the second electrode.

The separator adhesion apparatus according to the present invention may further include a sensor configured to sense the position of the spacing portion.

The adhesion unit may include a tip configured to press the spacing portion, the tip being made of the elastic material, an adhesion unit main body configured to allow the tip to be attached thereto, an upward-downward transfer portion configured to move the adhesion unit main body upwards and downwards, and a horizontal transfer portion configured to move the adhesion unit main body in a horizontal direction at a transfer speed synchronized with the transfer speed of the electrode stack when the tip presses the spacing portion.

The adhesion unit may include a cylindrical main body roll configured to be rotated about a central axis, at least one tool tip disposed at an outer surface of the main body roll and protruding therefrom, the tool tip being made of the elastic material, and a rotary unit configured to adjust the rotational speed of the main body roll.

The adhesion unit may adjust the rotational speed of the main body roll such that the tool tip presses the spacing portions of the electrode stack during transfer thereof, the tool tip may be disposed at the outer surface of the main body roll so as to be perpendicular to the spacing portion, and the length of the tool tip protruding outwards from the main body roll may be greater than the thickness of the electrode stack.

In a circle having the outermost side of the tool tip as a diameter, when the tool tip is provided in one, the length obtained by subtracting the thickness of the tool tip from the total circumference length of the circle may be equal to the distance between adjacent spacing portions or may be equal to the distance between nonadjacent spacing portions, and when the tool tip is provided in two or more, the circumferential length between closest tool tips may be equal to the distance between adjacent spacing portions or may be equal to the distance between nonadjacent spacing portions, and circumferential lengths between the closest tool tips may be equal to each other.

The rotary unit may include a control unit configured to synchronize the outermost circumferential speed of the tool tip with the transfer speed of the electrode stack when the adhesion unit presses the spacing portion.

The adhesion unit may be configured to adjust the protruding height of the tool tip depending on the thickness of the electrode stack.

The adhesion unit may be configured such that the elastic material is added to the entirety of an outer surface of a cylindrical pressing roll configured to be rotated about a central axis so as to have an equal thickness.

At this time, the adhesion unit may include a pressing roll upward-downward transfer portion configured to move the adhesion unit upwards and downwards such that the adhesion unit presses the spacing portion.

Protrusion-shaped end tool tips may be added along circumferences of opposite ends of the main body roll in a lateral direction, the first separator sheet and the second separator sheet may have surplus portions formed at opposite ends thereof parallel to a movement direction of the electrode stack so as to extend farther than the first electrode and the second electrode, and the end tool tips may press the first separator sheet and the second separator sheet at the surplus portions.

In addition, the present invention may provide various combinations of the above solving means.

### [Advantageous Effects]

As is apparent from the above description, a separator adhesion apparatus according to the present invention includes a structure configured to press a spacing portion between first electrodes and a spacing portion between second electrodes of an electrode stack, whereby it is possible to manufacture a unit cell configured such that surplus portions of adjacent separators are adhered to each other.

Since the surplus portions of the separators are adhered to each other, as described above, it is possible to prevent folding of the surplus portions of the separators during transfer and stacking of unit cells. Meanwhile, even though the surplus portions of the separators are folded in the state in which the surplus portions are adhered to each other, contact between the first electrode and the second electrode is prevented.

Also, in the case in which a process of adhering the spacing portion between the first electrodes and the spacing portion between the second electrodes of the electrode stack and a process of adhering the separator surplus portions formed parallel to a movement direction of the electrode stack are simultaneously performed, it is possible to simplify a unit cell manufacturing process.

Consequently, it is possible to prevent the occurrence of short circuit between the first electrode and the second electrode in a battery cell, and therefore it is possible to provide a battery cell with improved safety.

### [Description of Drawings]

FIG. 1 is a process view schematically showing a separator adhesion apparatus according to the present invention when viewed from the side.
FIG. 2 is a side view of a separator adhesion apparatus according to a first embodiment.
FIG. 3 is a side view of a separator adhesion apparatus according to a second embodiment.
FIG. 4 is a side view of a separator adhesion apparatus according to a third embodiment.
FIG. 5 is a side view of an adhesion unit of a separator adhesion apparatus according to a fourth embodiment.
FIG. 6 is a perspective view of an adhesion unit of a separator adhesion apparatus according to a fifth embodiment.
FIG. 7 is a side view of a separator adhesion apparatus according to a sixth embodiment and a perspective view of an adhesion unit thereof.
FIG. 8 is a perspective view of a separator adhesion apparatus according to a seventh embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but rather means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

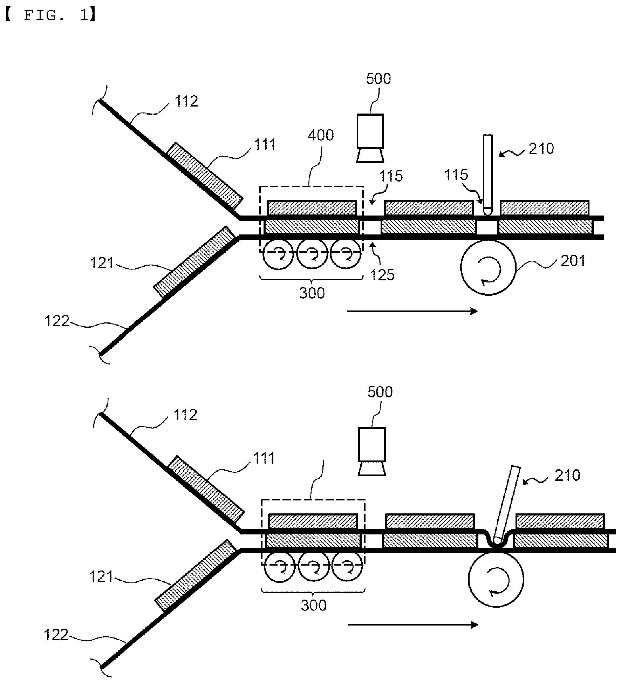

FIG. 1 is a process view schematically showing a separator adhesion apparatus according to the present invention when viewed from the side.

Referring to FIG. 1, first electrodes 111 are disposed on a first separator sheet 112 so as to be spaced apart from each other by a predetermined distance, second electrodes 121 are disposed on a second separator sheet 122 so as to be spaced apart from each other by a predetermined distance, and the first separator sheet 112 and the second separator sheet 122 are stacked to constitute an electrode stack.

The separator adhesion apparatus according to the present invention presses and adheres a spacing portion 115 formed between adjacent first electrodes 111 and a spacing portion 125 formed between adjacent second electrodes 121 to each other.

The separator adhesion apparatus includes an adhesion unit 210 located above the electrode stack, the adhesion unit being configured to press the spacing portion 115 between the first electrodes 111 and the spacing portion 125 between the second electrodes 121, and a support roll 201 located under the electrode stack, the support roll being configured to support the electrode stack.

In order to prevent damage to the first separator sheet when the adhesion unit presses the first separator sheet, an elastic material may be added to at least a part of an outer surface of the adhesion unit. The kind of the elastic material is not particularly restricted. For example, the elastic material may be polyurethane, silicone, or rubber.

The electrode stack is transferred by a transfer unit 300 in one direction, and the first separator sheet 112, on which the first electrodes 111 are disposed, and the second separator sheet 122, on which the second electrodes 121 are disposed, are supplied from different supply units, and are joined and stacked at an alignment unit 400. The length of the first electrode 111 parallel to a direction in which the electrode stack is transferred is less than the length of the second electrode 121. The first electrode may be a positive electrode, and the second electrode may be a negative electrode. Alternatively, the first electrode may be a negative electrode, and the second electrode may be a positive electrode.

The alignment unit 400 may guide the first electrode 111 and the second electrode 121, the sizes of which are different from each other, such that the centers thereof are aligned with each other. In addition, the alignment unit 400 may guide the first electrodes 111 and the second electrodes 121 so as to be spaced apart from each other by a predetermined distance and may dispose adjacent peripheries of the electrodes so as to be perpendicular to a movement direction of the electrode stack.

A sensor 500 located above the electrode stack may sense positions of the spacing portions 115 and 125. When the spacing portions 115 and 125 pass by the adhesion unit 210, the adhesion unit 210 presses the spacing portion 115 of the first separator sheet 112 against the spacing portion 125 of the second separator sheet 122 to adhere the spacing portions 115 and 125 to each other.

Subsequently, the separator sheets are cut at the adhered spacing portions to manufacture a unit cell. The manufactured unit cell is configured to have a structure in which separator surplus portions extending from the peripheries of the electrodes are adhered to each other, whereby it is possible to prevent folding of the separator surplus portions.

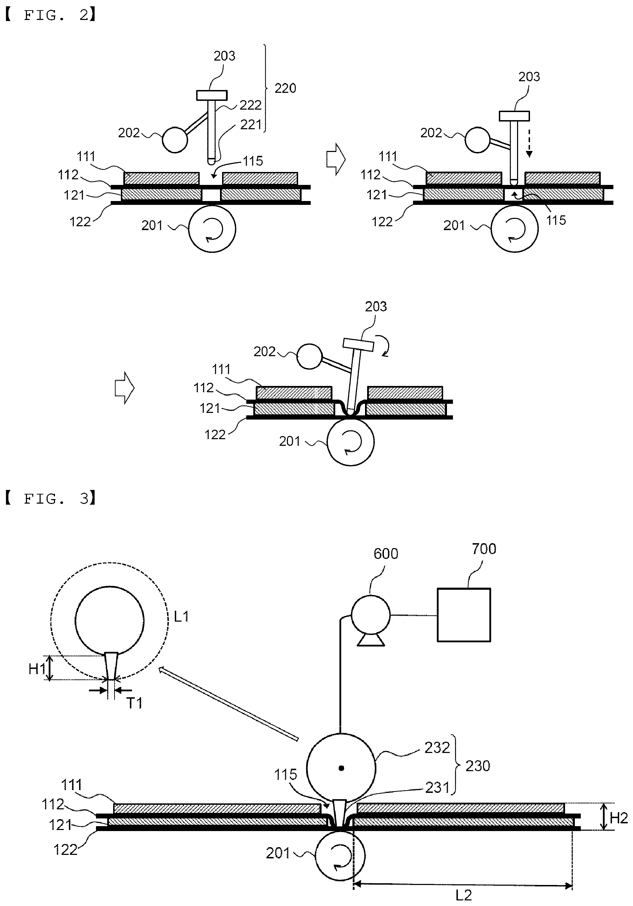

FIG. 2 is a side view of a separator adhesion apparatus according to a first embodiment.

In the separator adhesion apparatus according to the first embodiment, an electrode stack is horizontally transferred in a movement direction thereof while an adhesion unit 220 does not press first electrodes 111 disposed on a first separator sheet 112 and second electrodes 121 disposed on a second separator sheet 122 but presses only a spacing portion 115 of the first separator sheet 112.

Specifically, the adhesion unit 220 includes a tip 221 configured to press the spacing portion 115, the tip being made of an elastic material, an adhesion unit main body 222 configured to allow the tip 221 to be attached thereto, an upward-downward transfer portion 202 configured to move the adhesion unit main body 222 upwards and downwards, and a horizontal transfer portion 203 configured to move the adhesion unit main body 222 in a horizontal direction at a transfer speed synchronized with the transfer speed of the electrode stack when the tip 221 presses the spacing portion 115.

When the first electrode 111 and the second electrode 121 of the electrode stack move under the adhesion unit 220, the upward-downward transfer portion 202 transfers the adhesion unit main body 222 upwards such that the tip 221 is located above the electrode stack. When the spacing portion 115 is located under the adhesion unit 220, the upward-downward transfer portion 202 transfers the adhesion unit main body 222 downwards such that the tip 221 presses the spacing portion 115. Even at this time, the electrode stack is continuously moved in the horizontal direction. In order to prevent the separator sheets from being damaged by the tip 221, the horizontal transfer portion 203 may horizontally transfer the adhesion unit main body 222 such that the tip 221 is horizontally transferred at a transfer speed synchronized with the transfer speed of the electrode stack or may rotate the adhesion unit main body 222. When the first electrode 111 and the second electrode 121 are transferred again, the adhesion unit main body 222 is transferred upwards.

The upward-downward transfer portion 202 and the horizontal transfer portion 203 may adjust the position of the adhesion unit main body 222 according to a position signal of the spacing portion 115 sensed by the sensor located above the electrode stack.

FIG. 3 is a side view of a separator adhesion apparatus according to a second embodiment.

Referring to FIG. 3, in the separator adhesion apparatus according to the second embodiment, an adhesion unit 230 includes a cylindrical main body roll 232 configured to be rotated about a central axis, a tool tip 231 disposed at an outer surface of the main body roll 232 so as to protrude therefrom, the tool tip being made of an elastic material, and a rotary unit 600 configured to adjust rotational speed of the main body roll 232.

The main body roll 232 of the adhesion unit 230 is rotated in the state in which the central axis is fixed, and the tool tip 231 is attached to the main body roll 232 so as to protrude therefrom. The outer surface of the remaining part of the main body roll 232 excluding the tool tip 231 does not contact an electrode stack when the main body roll 232 is rotated, and the tool tip 231 presses a spacing portion 115 to adhere a first separator sheet 112 and a second separator sheet 122 to each other at the spacing portion 115.

The rotary unit 600 may adjust rotational speed of the main body roll such that the tool tip 231 presses the spacing portion 115 of the electrode stack during transfer thereof. The tool tip 231 is disposed so as to be perpendicular to a tangent plane of the main body roll 232. When the tool tip 231 presses the spacing portion 115, the central axis of the tool tip 231 is perpendicular to the spacing portion 115.

Additionally, the rotary unit 600 may include a control unit 700 configured to synchronize the outermost circumferential speed of the tool tip with the transfer speed of the electrode stack when the tool tip 231 presses the spacing portion 115.

For example, upon sensing that the distance between the first electrodes and the distance between the second electrodes have been changed as the result of sensing by the sensor, the control unit may control power of the rotary unit in order to decrease or increase the rotational speed of the main body roll.

The tool tip 231 must perform pressing such that the spacing portion of the first separator sheet 112 comes into contact with the spacing portion of the second separator sheet 122, and therefore the length H1 of the tool tip 231 is formed so as to be greater than the thickness H2 of the electrode stack.

In the adhesion unit 230, only the tool tip 231 contacts the electrode stack, and the remaining part of the main body roll 232 excluding the tool tip does not contact the electrode stack. In a circle having the outermost side of the tool tip 231 as a diameter, the length L1 obtained by subtracting the thickness T1 of the tool tip from the total circumference length of the circle may be equal to the distance L2 between adjacent spacing portions, or may be equal to the distance between nonadjacent spacing portions.

For example, when one adhesion unit 230 is disposed during a unit cell manufacturing process, in a circle having the outermost side of the tool tip 231 as a diameter, it is preferable for the length L1 obtained by subtracting the thickness T1 of the tool tip from the total circumference length of the circle to be equal to the distance L2 between adjacent spacing portions, i.e. the width of one electrode in the movement direction thereof.

As another example, when two adhesion units, e.g. a first adhesion unit and a second adhesion unit, are disposed during a unit cell manufacturing process, the first adhesion unit may press even-numbered spacing portions and the second adhesion unit may press odd-numbered spacing portions, whereby the first separator sheet and the second separator sheet may be attached to each other at all spacing portions.

That is, in a circle having the outermost side of the tool tip 231 as a diameter, the length L1 obtained by subtracting the thickness T1 of the tool tip from the total circumference length of the circle may be equal to the distance between an n-th spacing portion and an (n+2)-th spacing portion, among n (n being a natural number of 1 or more) spacing portions.

In addition, the size of a circle having the outermost side of the tool tip as a diameter and the number of tool tips formed on the main body roll may be set as needed within a range within which the tool tip presses the spacing portion and the outer surface of the remaining part of the main body roll excluding the tool tip does not contact the electrode stack.

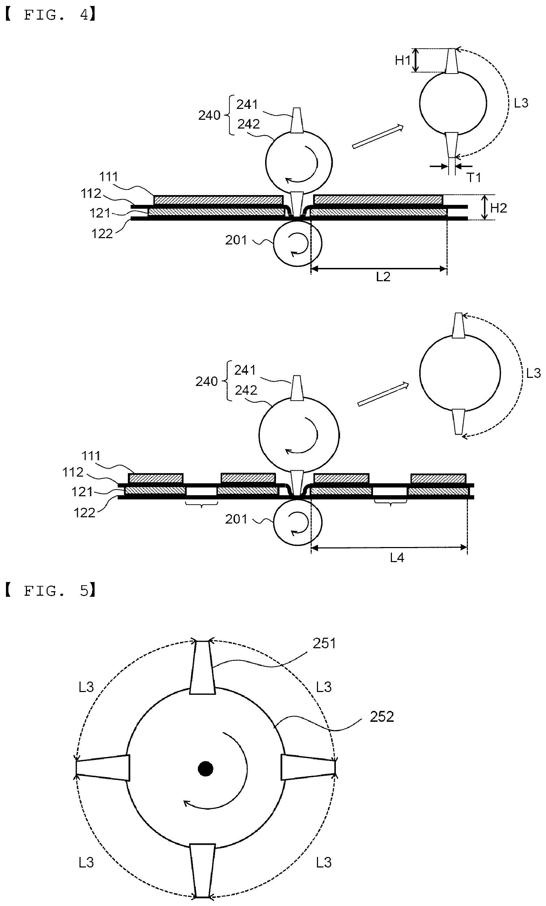

FIG. 4 is a side view of a separator adhesion apparatus according to a third embodiment.

Referring to FIG. 4, in the separator adhesion apparatus according to the third embodiment, an adhesion unit 240 includes a cylindrical main body roll 242 configured to be rotated about a central axis, two tool tips 241 provided at an outer surface of the main body roll 242 so as to protrude therefrom, each of the tool tips being made of an elastic material, and a rotary unit (not shown) configured to adjust rotational speed of the main body roll 242.

In the adhesion unit 240, the tool tips 241 protrude from the main body roll 242 in opposite directions. In a circle having the outermost side of each tool tip as a diameter, the circumferential lengths between the closest tool tips are equal to each other. That is, all tool tips may be disposed in a state of being equally spaced apart from each other.

For example, when one adhesion unit is provided during a unit cell manufacturing process, in a circle having the outermost side of each tool tip as a diameter, the circumferential length L3 between adjacent tool tips 241 may be equal to the distance L2 between adjacent spacing portions such that the adhesion unit can press all spacing portions.

Alternatively, when two adhesion units, e.g. a first adhesion unit and a second adhesion unit, are disposed during a unit cell manufacturing process, the first adhesion unit may press even-numbered spacing portions and the second adhesion unit may press odd-numbered spacing portions, whereby a first separator sheet and a second separator sheet may be attached to each other at all spacing portions.

That is, in a circle having the outermost side of each tool tip 241 as a diameter, the circumferential length L3 between adjacent tool tips 241 may be equal to the distance L4 between an n-th spacing portion and an (n+2)-th spacing portion, which are not adjacent to each other, among n (n being a natural number of 1 or more) spacing portions.

In the case in which a plurality of adhesion units is provided, as described above, different adhesion units may press different spacing portions, whereby the separator sheets may be adhered to each other at all spacing portions of the electrode stack that has passed through the plurality of adhesion units.

The above description of the second embodiment may be equally applied to the length of each tool tip, the rotary unit, and the controller in the third embodiment.

FIG. 5 is a side view of an adhesion unit of a separator adhesion apparatus according to a fourth embodiment.

Referring to FIG. 5, the adhesion unit of the separator adhesion apparatus according to the fourth embodiment includes a main body roll 252 configured to be rotated about a central axis and four tool tips 251 disposed at an outer surface of the main body roll 252 so as to protrude therefrom.

The tool tips 251 are equally spaced apart from each other. In a circle having the outermost side of each tool tip 251 as a diameter, the circumferential lengths L3 between adjacent tool tips 251 may be equal to each other.

In addition, the size of a circle having the outermost side of each tool tip as a diameter and the number of tool tips formed on the main body roll may be set as needed within a range within which the tool tips press the spacing portions and the outer surface of the remaining part of the main body roll excluding the tool tips does not contact the electrode stack.

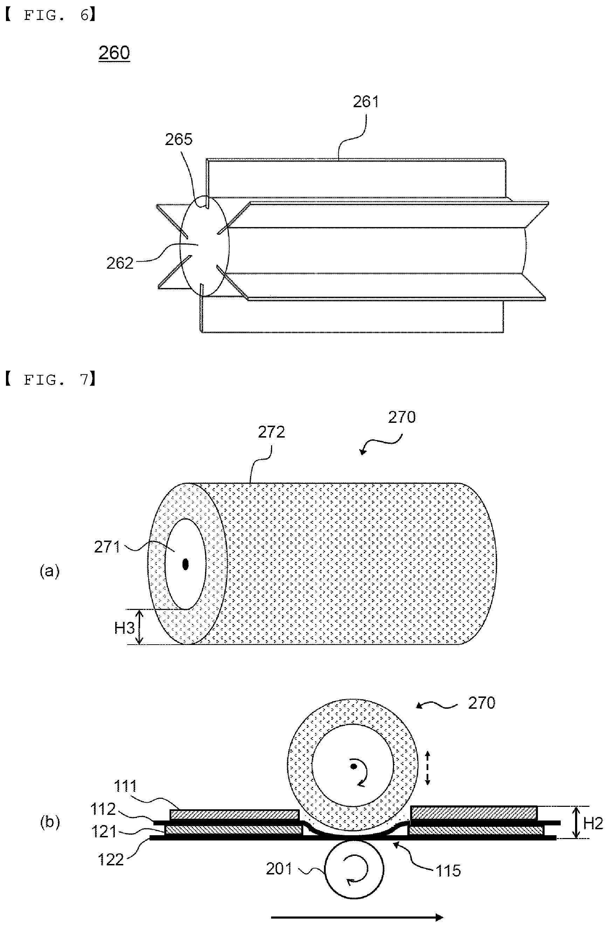

FIG. 6 is a perspective view of an adhesion unit of a separator adhesion apparatus according to a fifth embodiment.

The adhesion unit 260 of the separator adhesion apparatus according to the fifth embodiment includes a main body roll 262 configured to be rotated about a central axis and six tool tips 261 disposed at an outer surface of the main body roll 262 so as to protrude therefrom.

The adhesion unit 260 is configured to adjust the protruding height of the tool tips depending on the thickness of an electrode stack.

Specifically, grooves 265 are formed in the outer surface of the main body roll 262 of the adhesion unit 260 under the tool tips 261, wherein the tool tips 261 may be deeply inserted into the grooves 265 in order to decrease the height of each of the tool tips, or the tool tips 261 may be pulled upwards in a state of being located in the grooves 265 in order to increase the height of each of the tool tips from the outer surface of the main body roll 262.

In the case in which the separator adhesion apparatus according to the fifth embodiment is used, it is possible to adjust the height of the tool tips depending on the size of electrodes, and therefore it is possible to manufacture a unit cell including various sizes of electrodes without replacing the entirety of the adhesion unit.

FIG. 7 is a side view of a separator adhesion apparatus according to a sixth embodiment and a perspective view of an adhesion unit thereof.

The adhesion unit 270 of the separator adhesion apparatus according to the sixth embodiment is configured to have a structure in which an elastic material 272 is added to the entirety of an outer surface of a cylindrical pressing roll 271 configured to be rotated about a central axis.

The elastic material 272 is added to the entirety of the outer surface of the pressing roll 271 so as to have the same thickness.

A pressing roll upward-downward transfer portion (not shown) configured to move the adhesion unit 270 upwards and downwards such that the pressing roll 271 presses a spacing portion 115 may be added to the adhesion unit 270.

For example, the adhesion unit 270 may not press a first electrode 111 and a second electrode 121, and, when the spacing portion 115 is moved under the adhesion unit 270, the adhesion unit may be moved downwards such that a first separator sheet 112 and a second separator sheet 122 are attached to each other at the spacing portion 115.

Alternatively, the adhesion unit 270 may perform a function of laminating an electrode stack while being rotated in a state of being in contact with an outer surface of the first electrode 111.

Specifically, when the first electrode 111 is moved under the adhesion unit 270, the adhesion unit 270 may press the electrode stack while being rotated in a state of being in contact with the first electrode 111 so as to be laminated, and when a step is formed at the spacing portion 115 due to the thickness of the electrodes, the adhesion unit 270 may be moved downwards to push the first separator sheet 112 toward the second separator sheet 122. Subsequently, after the spacing portion 115 passes under the adhesion unit 270, the adhesion unit 270 may be moved upwards to press all of the first electrode 111, the first separator sheet 112, the second electrode 121, and the second separator sheet 122 so as to be laminated.

That is, while being rotated in a state of being in contact with an outer surface of the electrode stack, the adhesion unit 270 laminates the electrodes and the separator sheets at the position at which the electrodes and the separator sheets overlap each other, and adheres the separator sheets at the position at which only the separator sheets overlap each other.

At this time, the thickness H3 of the elastic material 272 may be greater than the thickness H2 of the electrode stack such that the elastic material can stably press the first separator sheet against the second separator sheet at the spacing portion.

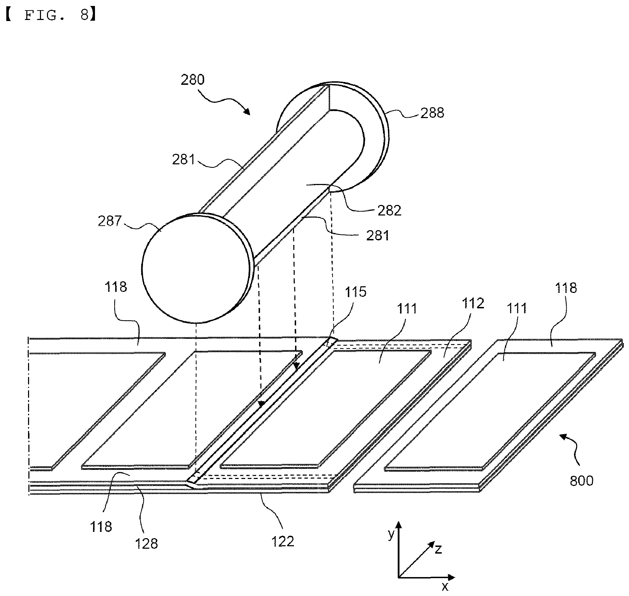

FIG. 8 is a perspective view of a separator adhesion apparatus according to a seventh embodiment.

Referring to FIG. 8, an adhesion unit 280 of the separator adhesion apparatus according to the seventh embodiment includes a cylindrical main body roll 282 configured to be rotated about a central axis, two tool tips 281 provided at an outer surface of the main body roll 282 so as to protrude therefrom, each of the tool tips being made of an elastic material, and protrusion-shaped end tool tips 288 provided along the circumferences of opposite ends of the main body roll 282 in a lateral direction (z).

A first separator sheet 112 having first electrodes 111 disposed thereon and a second separator sheet 122 having second electrodes disposed thereon respectively include surplus portions 118 and 128 formed at opposite ends thereof parallel to a movement direction (x) of an electrode stack so as to extend farther than the first electrode 111 and the second electrode.

The end tool tips 288 press the first separator sheet 112 and the second separator sheet 122 at the surplus portions 118 and 128, respectively.

In the case in which the separator adhesion apparatus according to the seventh embodiment is used, therefore, the first separator sheet 112 and the second separator sheet 122 are adhered to each other by the tool tips 281 at the spacing portion 115, and furthermore the first separator sheet 112 and the second separator sheet 122 are adhered to each other even at the surplus portions 118 and 128. Consequently, it is possible to manufacture a unit cell 800 in the state in which all of the four-directional separator surplus portions 118 and 128 are adhered as the result of cutting the separator sheets.

In the case in which the separator adhesion apparatus according to each of the first to sixth embodiments is used, a process of attaching the separator surplus portions 118 and 128 of FIG. 8 may be further performed after adhesion of the spacing portion. In the case in which the separator adhesion apparatus according to the seventh embodiment is used, however, it is possible to simultaneously perform processes of adhering the first separator sheet and the second separator sheet to each other at the spacing portion and the separator surplus portions, whereby it is possible to shorten unit cell manufacturing time.

Alternatively, a structure corresponding to the end tool tips added to the adhesion unit of the separator adhesion apparatus according to the seventh embodiment may be added to the adhesion unit of the separator adhesion apparatus according to each of the first to sixth embodiments, which may fall within the scope of the present invention.

In the case in which the separator adhesion apparatus according to the present invention is used, as described above, separator sheets may be adhered to each other at a spacing portion, at which electrodes are spaced apart from each other, of an electrode stack constituted by two or more stacked separator sheets. In the case in which a unit cell is manufactured using the separator adhesion apparatus, therefore, it is possible to manufacture a unit cell with improved safety, since separate surplus portions are attached to each other.

Those skilled in the art to which the present invention pertains will appreciate that various applications and modifications are possible within the category of the present invention based on the above description.

### (Description of Reference Symbols)

111: First electrode
112: First separator sheet
115, 125: Spacing portions
118, 128: Surplus portions
121: Second electrode
122: Second separator sheet
201: Support roll
202: Upward-downward transfer portion
203: Horizontal transfer portion
210, 220, 230, 240, 260, 270, 280: Adhesion units
221: Tip
222: Adhesion unit main body
231, 241, 251, 261, 281: Tool tips
232, 242, 252, 262, 282: Main body rolls
265: Groove
271: Pressing roll
272: Elastic material
288: End tool tip
300: Transfer unit
400: Alignment unit
500: Sensor
600: Rotary unit
700: Control unit
800: Unit cell
H1: Length of tool tip
H2: Thickness of electrode stack
H3: Thickness of elastic material
L1: Length obtained by subtracting thickness of tool tip from total circumference length of circle having outermost side of the tool tip as diameter
L2: Distance between adjacent spacing portions
L3: Circumferential length between adjacent tool tips in circle having outermost side of the tool tip as diameter
L4: Distance between nonadjacent spacing portions
T1: Thickness of tool tip

## Claims

1. A separator adhesion apparatus configured to press and adhere a spacing portion (115) between first electrodes and a spacing portion (125) between second electrodes to each other for preventing folding of a separator of a stacked type electrode assembly; wherein an electrode stack comprises:
a first separator sheet (112) having the first electrodes (111) disposed thereon so as to be spaced apart from each other by a predetermined distance, and a second separator sheet (122) having the second electrodes (121) disposed thereon so as to be spaced apart from each other by a predetermined distance, the separator adhesion apparatus comprising:
an adhesion unit (210, 220, 230, 240, 260, 270, 280) located above the electrode stack and configured to press the spacing portion (115) between the first electrodes (111) and the spacing portions (125) between the second electrodes(121); and
a support roll (201) located under the electrode stack and configured to support the electrode stack, **characterized in that** it comprises an alignment unit (400) configured to dispose the first electrodes (111) and the second electrodes (121) of the electrode stack such that centers thereof are aligned with each other and configured to guide the first electrodes 111 and the second electrodes 121 so as to be spaced apart from each other by a predetermined distance and
wherein the adhesion unit (270) comprises an elastic material (272) added to at least a part of an outer surface of the adhesion unit (210, 220, 230, 240, 260, 270, 280).

2. The separator adhesion apparatus according to claim 1, further comprising:
a transfer unit (300) configured to transfer the electrode stack.

3. The separator adhesion apparatus according to claim 2, wherein a length of the first electrode (111) parallel to a direction in which the electrode stack is transferred is less than a length of the second electrode (121).

4. The separator adhesion apparatus according to claim 1, further comprising a sensor (500) configured to sense a position of the spacing portion.

5. The separator adhesion apparatus according to claim 1, wherein the adhesion unit (210) comprises:
a tip (221) configured to press the spacing portion (115), the tip being made of the elastic material;
an adhesion unit main body (222) configured to allow the tip (221) to be attached thereto;
an upward-downward transfer portion (202) configured to move the adhesion unit main body (222) upwards and downwards; and
a horizontal transfer portion (203) configured to move the adhesion unit main body (222) in a horizontal direction at a transfer speed synchronized with a transfer speed of the electrode stack when the tip (221) presses the spacing portion (115).

6. The separator adhesion apparatus according to claim 1, wherein the adhesion unit (230, 240, 260, 280) comprises:
a cylindrical main body roll (232, 242, 252, 262, 282) configured to be rotated about a central axis;
at least one tool tip (231, 241, 251, 261, 281) disposed at an outer surface of the main body roll (232, 242, 252, 262, 282) and protruding therefrom, the tool tip (231, 241, 251, 261, 281) being made of the elastic material; and
a rotary unit (600) configured to adjust a rotational speed of the main body roll.

7. The separator adhesion apparatus according to claim 6, wherein the adhesion unit (210, 220, 230, 240, 260, 280) adjusts the rotational speed of the main body roll (232, 242, 252, 262, 282) such that the tool tip presses the spacing portions of the electrode stack during transfer thereof,
wherein the tool tip (231, 241, 251, 261, 281) is disposed at the outer surface of the main body roll (232, 242, 252, 262, 282) so as to be perpendicular to the spacing portion, and
wherein a length of the tool tip (231, 241, 251, 261, 281) protruding outwards from the main body roll (232, 242, 252, 262, 282) is greater than a thickness of the electrode stack.

8. The separator adhesion apparatus according to claim 7, wherein
in a circle having an outermost side of the tool tip (231) as a diameter,
when the tool tip (231) is provided in one, a length (L1) obtained by subtracting a thickness (T1) of the tool tip from a total circumference length of the circle is equal to a distance (L2) between adjacent spacing portions or is equal to a distance between nonadjacent spacing portions, and
when the tool tip is provided in two or more, a circumferential length between closest tool tips (241) is equal to a distance (L2) between adjacent spacing portions or is equal to a distance (L4) between nonadjacent spacing portions, and circumferential lengths between the closest tool tips are equal to each other.

9. The separator adhesion apparatus according to claim 6, wherein the rotary unit comprises a control unit (700) configured to synchronize an outermost circumferential speed of the tool tip with a transfer speed of the electrode stack when the adhesion unit presses the spacing portion.

10. The separator adhesion apparatus according to claim 6, wherein the adhesion unit (260) is configured to adjust a protruding height of the tool tip depending on a thickness of the electrode stack.

11. The separator adhesion apparatus according to claim 1, wherein the adhesion unit (270) is configured such that the elastic material (272) is added to an entirety of an outer surface of a cylindrical pressing roll (271) configured to be rotated about a central axis so as to have an equal thickness.

12. The separator adhesion apparatus according to claim 11, wherein the adhesion unit (220) comprises a pressing roll upward-downward transfer portion (202) configured to move the adhesion unit (220) upwards and downwards such that the adhesion unit presses the spacing portion.

13. The separator adhesion apparatus according to claim **1,** wherein protrusion-shaped end tool tips (288) are added along circumferences of opposite ends of the main body roll (282) in a lateral direction,
wherein the first separator sheet (112) and the second separator sheet (122) have surplus portions formed at opposite ends thereof parallel to a movement direction of the electrode stack so as to extend farther than the first electrode (111) and the second electrode (121), and
wherein the end tool tips (288) press the first separator sheet (112) and the second separator sheet (122) at the surplus portions.

## Patentansprüche

1. Separator-Anbringungsvorrichtung, welche dazu eingerichtet ist, einen Abstandsabschnitt (115) zwischen ersten Elektroden und einen Abstandsabschnitt (125) zwischen zweiten Elektroden zu pressen und aneinander anzubringen, um ein Falten eines Separators einer Elektrodenanordnung von einem gestapelten Typ zu verhindern; wobei ein Elektrodenstapel umfasst:
eine erste Separatorbahn (112), welche die ersten Elektroden (111) daran angeordnet aufweist, um voneinander um eine vorbestimmte Distanz beabstandet zu sein, und eine zweite Separatorbahn (122), welche die zweiten Elektroden (121) daran angeordnet aufweist, um voneinander um eine vorbestimmte Distanz beabstandet zu sein, wobei die Separator-Anbringungsvorrichtung umfasst:
eine Anbringungseinheit (210, 220, 230, 240, 260, 270, 280), welche über dem Elektrodenstapel angeordnet und dazu eingerichtet ist, den Abstandsabschnitt (115) zwischen den ersten Elektroden (111) und die Abstandsabschnitte (125) zwischen den zweiten Elektroden (121) zu pressen; und
eine Tragewalze (201), welche unter dem Elektrodenstapel angeordnet und dazu eingerichtet ist, den Elektrodenstapel zu tragen, **dadurch gekennzeichnet, dass** sie eine Ausrichtungseinheit (400) umfasst, welche dazu eingerichtet ist, die ersten Elektroden (111) und die zweiten Elektroden (121) des Elektrodenstapels derart anzuordnen, dass Mitten davon miteinander ausgerichtet sind, und dazu eingerichtet ist, die ersten Elektroden 111 und die zweiten Elektroden 121) derart zu führen, dass sie voneinander um eine vorbestimmte Distanz beabstandet sind, und wobei die Anbringungseinheit (270) ein elastisches Material (272) umfasst, welches zu wenigstens einem Teil einer äußeren Fläche der Anbringungseinheit (210, 220, 230, 240, 260, 270, 280) hinzugefügt ist.

2. Separator-Anbringungsvorrichtung nach Anspruch 1, ferner umfassend:
eine Transfereinheit (300), welche dazu eingerichtet ist, den Elektrodenstapel zu transferieren.

3. Separator-Anbringungsvorrichtung nach Anspruch 2, wobei eine Länge der ersten Elektrode (111) parallel zu einer Richtung, in welcher der Elektrodenstapel transferiert wird, geringer als eine Länge der zweiten Elektrode (121) ist.

4. Separator-Anbringungsvorrichtung nach Anspruch 1, ferner umfassend einen Sensor (500), welcher dazu eingerichtet ist, eine Position des Abstandsabschnitts zu erfassen.

5. Separator-Anbringungsvorrichtung nach Anspruch 1, wobei die Anbringungseinheit (210) umfasst:
eine Spitze (221), welche dazu eingerichtet ist, den Abstandsabschnitt (115) zu pressen, wobei die Spitze aus dem elastischen Material hergestellt ist;
einen Anbringungseinheit-Hauptkörper (222), welcher dazu eingerichtet ist, es der Spitze (221) zu erlauben, daran angebracht zu sein;
einen Oben-Unten-Transferabschnitt (202), welcher dazu eingerichtet ist, den Anbringungseinheit-Hauptkörper (222) nach oben und unten zu bewegen; und
einen horizontalen Transferabschnitt (203), welcher dazu eingerichtet ist, den Anbringungseinheit-Hauptkörper (222) in einer horizontalen Richtung bei einer Transfergeschwindigkeit zu bewegen, welche mit einer Transfergeschwindigkeit des Elektrodenstapels synchronisiert ist, wenn die Spitze (221) den Abstandsabschnitt (115) presst.

6. Separator-Anbringungsvorrichtung nach Anspruch 1, wobei die Anbringungseinheit (230, 240, 260, 280) umfasst:
eine zylindrische Hauptkörper-Walze (232, 242, 252, 262, 282), welche dazu eingerichtet ist, um eine zentrale Achse rotiert zu werden;
wenigstens eine Werkzeugspitze (231, 241, 251, 261, 281), welche an einer äußeren Fläche der Hauptkörper-Walze (232, 242, 252, 262, 282) angeordnet ist und davon vorsteht, wobei die Werkzeugspitze (231, 241, 251, 261, 281) aus dem elastischen Material hergestellt ist; und
eine Rotationseinheit (600), welche dazu eingerichtet ist, eine Rotationsgeschwindigkeit der Hauptkörper-Walze einzustellen.

7. Separator-Anbringungsvorrichtung nach Anspruch 6, wobei die Anbringungseinheit (210, 220, 230, 240, 260, 280) die Rotationsgeschwindigkeit der Hauptkörper-Walze (232, 242, 252, 262, 282) derart einstellt, dass die Werkzeugspitze die Abstandsabschnitte des Elektrodenstapels während eines Transfers davon presst, wobei die Werkzeugspitze (231, 241, 251, 261, 281) an der äußeren Fläche der Hauptkörper-Walze (232, 242, 252, 262, 282) angeordnet ist, um so senkrecht zu dem Abstandsabschnitt zu sein, und
wobei eine Länge der Werkzeugspitze (231, 241, 251, 261, 281), welche nach außen von der Hauptkörper-Walze (232, 242, 252, 262, 282) vorsteht, größer als eine Dicke des Elektrodenstapels ist.

8. Separator-Anbringungsvorrichtung nach Anspruch 7, wobei in einem Kreis, welcher eine äußerste Seite der Werkzeugspitze (231) als einen Durchmesser aufweist, wenn die Werkzeugspitze (231) in einem bereitgestellt ist, eine Länge (L1), welche erhalten wird, indem eine Dicke (T1) der Werkzeugspitze von einer gesamten Umfangslänge des Kreises subtrahiert wird, gleich einer Distanz (L2) zwischen benachbarten Abstandsabschnitten ist oder gleich einer Distanz zwischen nicht-benachbarten Abstandsabschnitten ist, und
wenn die Werkzeugspitze in zwei oder mehr bereitgestellt ist, eine Umfangslänge zwischen nächsten Werkzeugspitzen (241) gleich einer Distanz (L2) zwischen benachbarten Abstandsabschnitten ist oder gleich einer Distanz (L4) zwischen nicht-benachbarten Abstandsabschnitten ist, und Umfangslängen zwischen den nächsten Werkzeugspitzen gleich zueinander sind.

9. Separator-Anbringungsvorrichtung nach Anspruch 6, wobei die Rotationseinheit eine Steuereinheit (700) umfasst, welche dazu eingerichtet ist, eine äußerste Umfangsgeschwindigkeit der Werkzeugspitze mit einer Transfergeschwindigkeit des Elektrodenstapels zu synchronisieren, wenn die Anbringungseinheit den Abstandsabschnitt presst.

10. Separator-Anbringungsvorrichtung nach Anspruch 6, wobei die Anbringungseinheit (260) dazu eingerichtet ist, eine Vorstandshöhe der Werkzeugspitze abhängig von einer Dicke des Elektrodenstapels einzustellen.

11. Separator-Anbringungsvorrichtung nach Anspruch 1, wobei die Anbringungseinheit (270) derart eingerichtet ist, dass das elastische Material (272) zu einer Gesamtheit einer äußeren Fläche einer zylindrischen Presswalze (271) hinzugefügt ist, welche dazu eingerichtet ist, um eine zentrale Achse rotiert zu werden, um eine gleiche Dicke aufzuweisen.

12. Separator-Anbringungsvorrichtung nach Anspruch 11, wobei die Anbringungseinheit (220) einen Presswalzen-Oben-Unten-Transferabschnitt (202) umfasst, welcher dazu eingerichtet ist, die Anbringungseinheit (220) nach oben und unten zu bewegen, so dass die Anbringungseinheit den Abstandsabschnitt presst.

13. Separator-Anbringungsvorrichtung nach Anspruch 1, wobei vorsprungsförmige End-Werkzeugspitzen (288) entlang Umfängen von entgegengesetzten Enden der Hauptkörper-Walze (282) in einer lateralen Richtung hinzugefügt sind,
wobei die erste Separatorbahn (112) und die zweite Separatorbahn (122) zusätzliche Abschnitte an entgegengesetzten Enden davon parallel zu einer Bewegungsrichtung des Elektrodenstapels gebildet aufweisen, um sich weiter als die erste Elektrode (111) und die zweite Elektrode (121) zu erstrecken, und wobei die End-Werkzeugspitzen (288) die erste Separatorbahn (112) und die zweite Separatorbahn (122) an den zusätzlichen Abschnitten pressen.

## Revendications

1. Appareil de collage de séparateur configuré pour presser et coller une portion d'espacement (115) entre des premières électrodes et une portion d'espacement (125) entre des secondes électrodes l'une à l'autre pour empêcher le pliage d'un séparateur d'un ensemble d'électrodes de type empilé ; dans lequel un empilement d'électrodes comprend :
une première feuille de séparateur (112) ayant les premières électrodes (111) disposées sur celle-ci de manière à être espacées les unes des autres d'une distance prédéterminée, et une seconde feuille de séparateur (122) ayant les secondes électrodes (121) disposées sur celle-ci de manière à être espacées les unes des autres d'une distance prédéterminée, l'appareil de collage de séparateur comprenant :
une unité de collage (210, 220, 230, 240, 260, 270, 280) située au-dessus de l'empilement d'électrodes et configurée pour presser la portion d'espacement (115) entre les premières électrodes (111) et les portions d'espacement (125) entre les secondes électrodes (121) ; et
un rouleau de support (201) situé sous l'empilement d'électrodes et configuré pour supporter l'empilement d'électrodes, **caractérisé en ce qu'**il comprend une unité d'alignement (400) configurée pour disposer les premières électrodes (111) et les secondes électrodes (121) de l'empilement d'électrodes de sorte que les centres de celles-ci soient alignés les uns sur les autres et configurée pour guider les premières électrodes (111) et les secondes électrodes (121) de manière à ce qu'elles soient espacées les unes des autres d'une distance prédéterminée, et dans lequel l'unité de collage (270) comprend un matériau élastique (272) ajouté à au moins une partie d'une surface extérieure de l'unité de collage (210, 220, 230, 240, 260, 270, 280).

2. Appareil de collage de séparateur selon la revendication 1, comprenant en outre :
une unité de transfert (300) configurée pour transférer l'empilement d'électrodes.

3. Appareil de collage de séparateur selon la revendication 2, dans lequel une longueur de la première électrode (111) parallèle à une direction dans laquelle l'empilement d'électrodes est transféré est inférieure à une longueur de la seconde électrode (121).

4. Appareil de collage de séparateur selon la revendication 1, comprenant en outre un capteur (500) configuré pour détecter une position de la portion d'espacement.

5. Appareil de collage de séparateur selon la revendication 1, dans lequel l'unité de collage (210) comprend :
une pointe (221) configurée pour presser la portion d'espacement (115), la pointe étant faite du matériau élastique ;
un corps principal d'unité de collage (222) configuré pour permettre à la pointe (221) d'être fixée à celui-ci ;
une portion de transfert vers le haut et vers le bas (202) configurée pour déplacer le corps principal d'unité de collage (222) vers le haut et vers le bas ; et
une portion de transfert horizontal (203) configurée pour déplacer le corps principal d'unité de collage (222) dans une direction horizontale à une vitesse de transfert synchronisée sur une vitesse de transfert de l'empilement d'électrodes lorsque la pointe (221) presse la portion d'espacement (115).

6. Appareil de collage de séparateur selon la revendication 1, dans lequel l'unité de collage (230, 240, 260, 280) comprend :
un rouleau de corps principal cylindrique (232, 242, 252, 262, 282) configuré pour tourner autour d'un axe central ;
au moins une pointe d'outil (231, 241, 251, 261, 281) disposée au niveau d'une surface extérieure du rouleau de corps principal (232, 242, 252, 262, 282) et faisant saillie depuis celle-ci, la pointe d'outil (231, 241, 251, 261, 281) étant faite du matériau élastique ; et
une unité rotative (600) configurée pour ajuster une vitesse de rotation du rouleau de corps principal.

7. Appareil de collage de séparateur selon la revendication 6, dans lequel l'unité de collage (210, 220, 230, 240, 260, 280) ajuste la vitesse de rotation du rouleau de corps principal (232, 242, 252, 262, 282) de sorte que la pointe d'outil presse les portions d'espacement de l'empilement d'électrodes pendant le transfert de celui-ci,
dans lequel la pointe d'outil (231, 241, 251, 261, 281) est disposée au niveau de la surface extérieure du rouleau de corps principal (232, 242, 252, 262, 282) de manière à être perpendiculaire à la portion d'espacement, et
dans lequel une longueur de la pointe d'outil (231, 241, 251, 261, 281) faisant saillie vers l'extérieur depuis le rouleau de corps principal (232, 242, 252, 262, 282) est supérieure à une épaisseur de l'empilement d'électrodes.

8. Appareil de collage de séparateur selon la revendication 7, dans lequel
dans un cercle ayant un côté le plus extérieur de la pointe d'outil (231) comme diamètre, lorsque la pointe d'outil (231) est fournie en un exemplaire, une longueur (L1) obtenue en soustrayant une épaisseur (T1) de la pointe d'outil d'une longueur de circonférence totale du cercle est égale à une distance (L2) entre des portions d'espacement adjacentes ou est égale à une distance entre des portions d'espacement non adjacentes, et
lorsque la pointe d'outil est fournie en deux exemplaires ou plus, une longueur circonférentielle entre les pointes d'outil (241) les plus proches est égale à une distance (L2) entre des portions d'espacement adjacentes ou est égale à une distance (L4) entre des portions d'espacement non adjacentes, et des longueurs circonférentielles entre les pointes d'outil les plus proches sont égales les unes aux autres.

9. Appareil de collage de séparateur selon la revendication 6, dans lequel l'unité rotative comprend une unité de commande (700) configurée pour synchroniser une vitesse circonférentielle la plus extérieure de la pointe d'outil sur une vitesse de transfert de l'empilement d'électrodes lorsque l'unité de collage presse la portion d'espacement.

10. Appareil de collage de séparateur selon la revendication 6, dans lequel l'unité de collage (260) est configurée pour ajuster une hauteur en saillie de la pointe d'outil en fonction d'une épaisseur de l'empilement d'électrodes.

11. Appareil de collage de séparateur selon la revendication 1, dans lequel l'unité de collage (270) est configurée de sorte que le matériau élastique (272) soit ajouté sur une entièreté d'une surface extérieure d'un rouleau de pression cylindrique (271) configuré pour tourner autour d'un axe central de manière à avoir une épaisseur égale.

12. Appareil de collage de séparateur selon la revendication 11, dans lequel l'unité de collage (220) comprend une portion de transfert vers le haut et vers le bas (202) de rouleau de pression configurée pour déplacer l'unité de collage (220) vers le haut et vers le bas de sorte que l'unité de collage presse la portion d'espacement.

13. Appareil de collage de séparateur selon la revendication 1, dans lequel des pointes d'outil d'extrémité (288) en forme de saillie sont ajoutées le long de circonférences d'extrémités opposées du rouleau de corps principal (282) dans une direction latérale, dans lequel la première feuille de séparateur (112) et la seconde feuille de séparateur (122) ont des portions excédentaires formées à des extrémités opposées de celles-ci parallèlement à une direction de déplacement de l'empilement d'électrodes, de manière à s'étendre au-delà de la première électrode (111) et de la seconde électrode (121), et
dans lequel les pointes d'outil d'extrémité (288) pressent la première feuille de séparateur (112) et la seconde feuille de séparateur (122) au niveau des portions excédentaires.
